# EUROPEAN PATENT SPECIFICATION

(11) **EP 2 178 708 B1**
(45) Date of publication and mention of the grant of the patent: **08.11.2017**
(21) Application number: 07766627.9
(22) Date of filing: 16.07.2007
(51) Int. Cl.: B60C 9/09, B60C 19/00, B60C 15/00, B60C 9/22, B60C 9/02

(54) **PAIR OF PNEUMATIC TYRES FOR TWO -WHEELED VEHICLES**
LUFTREIFENPAAR FÜR ZWEIRÄDRIGES FAHRZEUG
PAIRE DE BANDAGES PNEUMATIQUES DESTINÉS À UN VÉHICULE À DEUX ROUES

(43) Date of publication of application: 28.04.2010
(73) Proprietor: Pirelli Tyre S.p.A., 20126 Milano (IT)
(72) Inventor: BRUSCHELLI, Luca, I-20126 Milan (IT); DAGHINI, Guido, I-20126 Milano (IT); MARIANI, Mario, I-20126 Milan (IT); PARENTE, Rocco, I-20126 Milano (IT)
(74) Representative: Fiammenghi, Eva
(86) International application number: PCT/IB2007/001993
(87) International publication number: WO 2009/010813

(56) References cited:
- EP-A- 0 219 311
- EP-A- 0 483 710
- EP-A- 0 507 184
- WO-A-03/045674
- WO-A-2006/098112
- GB-A- 2 102 354
- US-A- 4 573 511
- US-A1- 2007 158 009

## Description

The present invention relates to a pair of pneumatic tyres particularly adapted to equip two-wheeled vehicles.

It is known that a tyre generally comprises: a carcass structure having at least one carcass ply the ends of which are in engagement with respective circumferential annular reinforcing structures integrating annular elements usually identified as "bead cores"; a belt structure applied at a radially external position to the carcass structure; a pair of sidewalls applied at an axially external position to side surfaces of the carcass structure, each extended radially away from one of the annular anchoring structures towards said belt structure; a tread band usually consisting of a strip of elastomeric material of suitable thickness, which is applied onto the belt structure at a radially external position. Formed in the tread band, following a moulding operation carried out concurrently with vulcanisation of the tyre, are longitudinal and/or transverse grooves such disposed as to define a desired "tread pattern".

Possibly the carcass structure can be coated, on its inner walls, with an air-proof layer generally termed "liner". The latter is essentially made up of a layer of an airtight elastomeric material that in tubeless tyres is adapted to ensure hermetic sealing of the tyre itself, once inflated.

As compared with tyres for four-wheeled vehicles, quite peculiar performance involving many structural differences is required from tyres for two-wheeled vehicles. The most important differences result from the fact that when a motorcycle is running on a bend it must reach a much greater inclination than when it runs on a straight stretch, thus forming an angle with the perpendicular to the ground, (termed "camber angle") that usually reaches 45°, but that can even reach 65° under very hard running conditions. Therefore, when a motorcycle gets over a bend, the contact area of the tyre progressively moves from the central region of the tread to the axially outermost region in the direction of the bend centre. For this reason tyres for two-wheeled vehicles are distinguishable due to their marked transverse curvature. In addition, during running on a bend a force in the direction on which the camber angle acts is generated, which force opposes the centrifugal force. The force thus generated is a function of the curvature and deformations to which the tyre is subjected under these conditions. These deformations are to be avoided as they involve localised temperature increases, greater energy dispersion and blend slippage.

It is therefore the custom to act on the tyre structure so as to reduce said deformations or distortions.

In particular cases and/or for specific uses requiring a higher strength for the tyre sidewalls than that offered by the carcass ply, also in combination with a reduced section height, the sidewalls of said tyre must be strengthened with additional reinforcing elements.

In particular, from document US3044522 a reinforcement for tyres is known which is assembled on a collapsible drum and subsequently applied to the tyre carcass. The reinforcement is formed of axially adjacent layers upon interposition of an elastomeric filling element. Each layer is defined by a plurality of coils disposed radially close to each other and extending in a sinuous course with a predetermined pitch and width. In addition, the coils of two distinct layers are circumferentially offset with respect to each other by about half a pitch.

In the European patent EP1446279, adoption of annular stiffening inserts placed at the sidewalls of radial tyres to increase stiffness thereof has been proposed by the Applicant, said annular inserts being obtained through circumferential winding of at least one continuous filament-like element on several continuous turns so as to form a series of coils disposed radially close to each other and concentric with the geometrie rotation axis of the tyre.

Moreover, in the European patent application EP0219311, a motorcycle tyre is disclosed provided with a reinforced carcass comprising cords disposed over the carcass at an angle of 20° to 50° to the circumferential direction. Similar reinforced carcass are also described in documents GB2102354, EP0483710 and EP0507184.

In particular, according to the Applicant' s opinion, control of the deformations caused by application of twisting moments to the tyre is still a persisting interest. In fact, it is to be pointed out that on acceleration, a torque in the rolling direction of the tyre corresponding to the forward running of the vehicle is applied onto the vehicle's s wheels and in particular the rear wheel, while on braking a torque oriented in the apposite direction relative to the preceding one is applied onto the vehicle's wheels, in particular the front wheel.

Both said types of torque involve a tyre distortion and consequently modify the shape of the tyre footprint above all on a bend, generate localised rises in temperature and increase consumptions.

In addition, the greater the distortion induced by the torque on the tyre, the smaller the quickness in the tyre response and consequently the vehicle control.
The Applicant has faced up to the problem of increasing the tyre resistance to distortion due to application both of twisting moments both on braking and of twisting moments on acceleration.
In addition, the Applicant has faced the problem of reducing the delay in the tyre response following deformations induced on braking and on acceleration.

The Applicant has also faced up to the problem of increasing stiffness of the sidewalls in radial tyres, while maintaining the advantages typical of a tyre with a radial structure in terms of lightness in weight, ride comfort and structural resistance to high speeds.
The Applicant has found that said problems can be solved by producing a pair of tyres designed to be mounted on the rear and front wheels of a two-wheeled vehicle, in which each tyre of the pair is provided with a pair of reinforcing structures disposed at the tyre sidewalls and comprising a plurality of inclined cords.
According to a first aspect, the present invention relates to a pair of tyres comprising a front tyre and a rear tyre to be mounted on a front and rear wheels respectively of a two-wheeled vehicle, wherein each of said front and rear tyres comprises:
- a carcass structure having at least one carcass ply, said carcass ply being shaped in a substantially toroidal configuration and having its ends in engagement with respective circumferential annular reinforcing structures;
- a belt structure applied to said carcass structure at a radially external position;
- a tread band applied at a radially external position to said belt structure;
- a pair of sidewalls laterally applied onto opposite sides relative to said carcass structure;
- a pair of reinforcing side structures, each applied at a sidewall;
and wherein:
- each reinforcing side structure comprises a plurality of cords;
- at each point of a cord, an angle (α) is identified which is included between the tangent of the cord direction at that point and the tangent to a circumferential direction of the tyre passing through said point and oriented in the rolling direction of the tyre;
- said angle (α) in said rear tyre is larger than 90° and said angle (α) in said front tyre is smaller than 90°.

Here and in the following by rolling direction of the tyre it is intended a rotation direction corresponding to the forward running direction of said tyre when mounted on a vehicle.

Preferably the angle (α) is constant or variable in a monotonic manner over the whole length of the cord.

In this manner, the cords of the reinforcing side structure are such disposed as to be subjectted, during rolling of the tyre, to a force hindering deformation of the tyre itself, as better illustrated in the following.

According to a preferred embodiment, each reinforcing side structure is a substantially annular structure.

Preferably, the reinforcing structure has a height greater than or equal to 20% of the height of the sidewall.

According to a further aspect, the present invention relates to a tyre for two-wheeled vehicles comprising:
- a carcass structure having at least one carcass ply, said carcass ply being shaped in a substantially toroidal configuration and having its ends in engagement with respective circumferential annular reinforcing structures;
- a belt structure applied to said carcass structure at a radially external position;
- a tread band applied at a radially external position to said belt structure;
- a pair of sidewalls laterally applied onto opposite sides relative to said carcass structure;
- a pair of reinforcing side structures, each applied at a sidewall;
wherein each reinforcing side structure comprises a plurality of cords; wherein:
- each reinforcing side structure extends from a radially innermost position to a radially external end of the respective annular reinforcing structure towards the belt structure;
- at each point of a cord, an angle (α) different from zero is identified, which is included between the tangent of the cord direction at that point and the tangent to a circumferential direction of the tyre passing through said point according to the rolling direction of the tyre, wherein said angle is included in the range of 91° to 160°, inclusive of the extremes, for a rear tyre.
In accordance with a preferred embodiment, the angle (α) is constant over the whole length of said cord.

Preferably the angle (α) is variable in a monotonic manner over the whole length of said cord.

According to an embodiment of the tyre in reference, said angle (α) is larger than or equal to 20°.

Preferably, said angle (α) is included within the range of 20° to 89°, inclusive of the extremes, for a front tyre.

Advantageously, the cords are made of metal.

According to another embodiment, the cords comprise high-module textile fibres.

Here and in the following by high module fibres are intended fibres with a modulus of elasticity of at least approximately 25000 N/mm2.

Further features and advantages of the invention will become more apparent from the detailed description of some preferred but not exclusive embodiments of a tyre for two-wheeled vehicles according to the present invention.

This description will be set out hereinafter with reference to the accompanying drawings, given by way of non-limiting example, in which:
- Fig. 1 is a side view of a tyre for two-wheeled vehicles provided with a reinforcing side structure made in accordance with the present invention;
- Fig. 2 is a diagrammatic side view carried out in a plane radial to the rotation axis of a first embodiment of a tyre for two-wheeled vehicles according to the present invention, highlighting a reinforcing side structure with the cords extending in a straight course;
- Fig. 3 is a diagrammatic side view carried out in a plane radial to the rotation axis of a second embodiment of a tyre for two-wheeled vehicles according to the present invention, highlighting a reinforcing side structure with the cords disposed at a varying angle and extending in a curvilinear course;
- Fig. 4 is a diagrammatic side view of a two-wheeled vehicle using a pair of tyres in accordance with the invention;
- Fig. 5 is a diagram showing the variation in the percent difference of some stiffness parameters as a function of the load on the tyre (expressed in kg) between a tyre of the invention and a traditional tyre;
- Fig. 6 is a diagram showing the percent difference of some stiffness parameters to a given load imposed on the tyre (expressed in kg), between a tyre of the invention and a traditional tyre.

With reference to the drawings, a tyre for two-wheeled vehicles has been generally identified with 100 or 200; it comprises a carcass structure including at least one carcass ply 2 preferably having a first and a second carcass half-plies 3, 4, said carcass ply 2 being shaped in a substantially toroidal configuration and being in engagement, by its opposite circumferential edges, with at least one annular reinforcing structure 9, so as to form a structure usually identified as "bead".

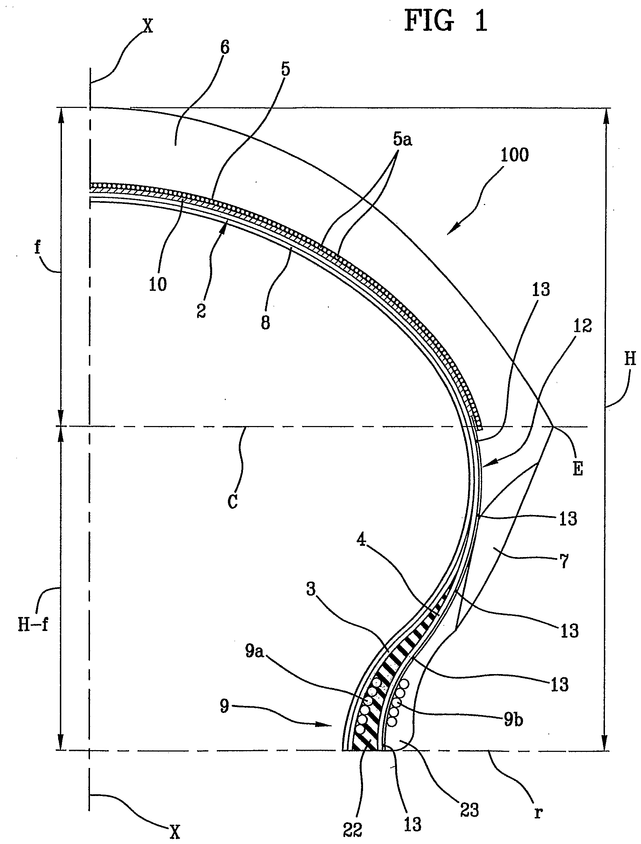

In the preferred embodiment shown in Fig. 1 the carcass ply 2, as above mentioned, is preferably formed of two carcass half-plies 3, 4. This carcass ply 2 is built following the method shown in document WO 00/38906.

Here and in the following, by carcass half-ply it is intended a structure having a substantially toroidal extension which is formed of a plurality of strip-like elements placed at a mutual distance which is substantially the same as the transverse size of the strip-like element itself.

The annular reinforcing structure 9 has at least one annular insert made up of a preferably metallic thread element at least partly coated with an elastomeric material and formed into substantially concentric coils, each coil being alternatively defined by a length of a continuous spiral or by concentric rings formed of respective filament-like elements.

Preferably, as shown in Fig. 1, two annular inserts 9a and 9b are provided as well as a filler 22 of elastomeric material placed at an axially external position to the first annular insert 9a. The second annular insert 9b, still as shown in Fig. 1, is disposed at an axially external position to the second half-ply 4. Finally, at an axially external position to said second annular insert 9b and not necessarily in contact therewith, a further filler 23 is provided which completes manufacture of the annular reinforcing structure 9.

In an alternative embodiment not shown, the carcass ply 2 is of the so-called traditional type. This carcass ply 2 has its opposite side edges associated with particular annular reinforcing structures identified as bead cores. In this case, association between the carcass ply and bead cores takes place by turning up the opposite side edges of the carcass ply around the bead cores themselves, so as to form the so-called carcass end flaps.

In this embodiment, the carcass ply preferably comprises textile cords selected from those usually adopted in manufacturing tyre carcasses, made of nylon, rayon, PET, PEN for example, with an elementary thread of a diameter included between 0.35 mm and 1.5 mm.

Circumferentially applied to the carcass ply, at a radially external position, is a belt structure 5 and circumferentially superposed thereon is a tread band 6 in which, following a moulding operation carried out concurrently with the tyre vulcanisation, longitudinal and transverse grooves such arranged as to give rise to a desired "tread pattern" are formed.

Tyre 100, 200 also comprises a pair of sidewalls 7 laterally applied to said carcass structure, on opposite sides thereof.

Said tyre 100 or 200 has a right section marked by a high transverse curvature. In particular, tyre 1 has a section height H measured in the equatorial plane between the centre of the tread band and the fitting diameter identified by the reference line r passing through the tyre beads.

Tyre 100 or 200 further has a width C defined by the distance between the laterally opposite ends E of the tread band and a curvature defined by the particular value of the ratio between the distance f of the tread centre from the line passing through the ends E of the tread itself, measured in the equatorial tyre plane, and width C.

For high-curvature tyres in the present specification and in the following claims it is intended to refer to tyres having a curvature ratio f/C ≥ 0.2 and preferably f/C ≥ 0.28. This curvature ratio is, at all events, ≤ 0.8 and preferably f/C ≤ 0.5.

As to the sidewalls, the invention preferably applies to tyres with sidewalls that are not particularly low (Fig. 1). Here and in the following, by tyres with sidewalls that are not particularly low it is intended tyres in which the height-sidewall ratio (H-f)/H is greater than 0.4 (see Fig. 1).

The carcass structure may be possibly coated on its inner walls with an air-proof layer 8 or a so-called "liner", essentially made up of a layer of an airtight elastomeric material adapted to ensure hermetic sealing of the tyre itself, once inflated. Preferably, the belt structure 5 comprises a layer having a plurality of circumferential coils disposed in axial side by side relationship, and consisting of a rubberised cord 5a or a strip-like element comprising some rubberised cords 5a (preferably 2 to 5), spirally wound up at a substantially zero angle relative to the equatorial plane X-X of the tyre.

It is to be noted herein and in the following that even if spiralling itself and any pitch variation can determine laying angles different from zero, these angles are so small that they can be always considered as substantially equal to zero.

Generally, the cords 5a of the belt structure 5 are textile or metallic cords. Preferably, said cords 5a are made of high-carbon (HT) steel wires, i.e. steel wires containing more than 0.9% of carbon.

Still more preferably, said steel cords are high-elongation cords of the type described in patent EP461646 in the name of the same Applicant for achieving a soft behaviour of the tyre at low speed and a stiff behaviour at high speed.

Briefly, according to what described in said patent, these cords 5a are steel cords of the high-elongation type, generally known as "HE", wound in the same direction (Lang's lay cords), in other words steel cords having an ultimate elongation included between 4% and 8%.

In detail, these cords consist of a given number of strands, 1 to 5, and preferably 3 to 4. Each strand is made up of a given number of basic threads, 2 to 10 and preferably 4 to 7. Each basic thread has a diameter larger than 0.10 mm, preferably included between 0.12 and 0.25 mm. The basic threads in the strands and the strands in the cord are helically wound together in the same direction, with the same or different winding pitches for the threads and the strands. These cords 5a, as described in patent EP461646, are characterised by a particular load-elongation diagram showing a curvilinear portion connecting two stretches that are substantially straight but of different slope.

Cords 5a in the deflated tyre are provided in a (load-elongation) condition corresponding in said diagram to a particular point, termed "G", which is in the curvilinear portion, which portion has an elongation value typically included between 1.5% and 3%.

In use, due to tension generated by tyre inflation and high speed, cords 5a shall, on the contrary, work in their region at a high modulus or a low elongation.

It is the Applicant's opinion that a tyre with a belt structure like the just described one and a reinforcing side structure at the sidewalls like the above mentioned one and described in detail in the following, can show excellent drive features also at medium and low speeds.

In particular, at low speeds such a tyre is soft in the crown region, on straight stretches, offering high ride comforts.

In addition, such a tyre appears to be stiff and ready on a bend, ensuring a prompt response of the vehicle, above all under critical conditions such as braking or acceleration.

Alternatively, for the belt structure 5 textile cords can be employed, and these can consist of synthetic fibres, nylon, rayon, PEN, PET for example, preferably high-modulus synthetic fibres, in particular aramidic fibres (Kevlar® fibres, for example). According to a further alternative embodiment, hybrid fibres can be employed which comprise at least one low-modulus thread, i.e. a modulus not exceeding about 15000 N/mm2 (nylon or rayon for example), interlaced with at least one high-modulus thread (Kevlar®, for example), i.e. a modulus at least as high as 25000 N/mm2.

Alternatively, the belt structure 5 can consist of at least two radially superposed layers, each made up of elastomeric material reinforced with cords disposed parallel to each other. The layers are disposed in such a manner that the cords of the first belt layer are oriented obliquely to the equatorial plane of the tyre, while the cords of the second layer have an oblique orientation too, but they symmetrically cross the cords of the first layer (forming a so-called "crossed belt"). Optionally, tyre 100 or 200 can also comprise a layer 10 of elastomeric material placed between said carcass structure and said belt structure 5 formed of said circumferential coils, said layer 10 preferably extending on a surface substantially corresponding to the extension surface of said belt structure 5. Alternatively, said layer 10 extends on a smaller surface than the extension surface of the belt structure 5, only on opposite side surfaces thereof, for example.

In a further embodiment, an additional layer of elastomeric material (not shown in Fig. 1) is placed between said belt structure 5 formed of said circumferential coils, and said tread band 6, said layer preferably extending over a surface substantially corresponding to the extension surface of said belt structure 5. Alternatively, said layer only extends along at least one portion of the belt structure 5 extension, on opposite side portions thereof for example.

In a preferred embodiment, at least one of said layer 10 and additional layer comprises short aramidic fibres, Kevlar® fibres for example, dispersed in said elastomeric material.

The tyre in accordance with the invention comprises a pair of reinforcing side structures 12 laterally applied at the sidewalls. Each reinforcing side structure 12 comprises a plurality of cords 13 at least partly embedded in at least one layer of elastomeric material.

The reinforcing side structure 12 circumferentially extends preferably in a continuous annular manner around the rotation axis of the tyre itself. Preferably, still as shown in Fig. 1, each reinforcing side structure 12 extends from a radially innermost position relative to the radially outermost end of the circumferential annular structure 9b. In particular, the reinforcing side structure 12 extends from the radially innermost end of the tyre sidewall over at least 20% of the sidewall height.

In the preferred embodiment shown in Fig. 1, the reinforcing structure 12 extends over the whole height of sidewall 7 until reaching said belt structure 5.

In this case, the reinforcing structure 12 comes into contact with the belt structure 5 and the latter overlaps the reinforcing side structure 12 over a given stretch thereof.

Alternatively, it is the reinforcing side structure 12 that overlaps the belt structure 5 over a certain stretch thereof.

It is to be noted that each reinforcing structure 12 comprises a plurality of cords 13 disposed inclined to a circumferential direction of the tyre.

In detail, at each point of a cord 13, a angle (α) is identified between the tangent of the cord direction at that point and the tangent to a circumferential direction of the tyre passing through that point and oriented in the rolling direction.

Preferably, the angle (α) is greater than or equal to 20°. Most preferably, the angle (α) is greater than 30°.

In particular, the angle (α) is included in the range of 20° to 89°, inclusive of the extremes, for a front tyre and is included in the range of 91° to 160°, inclusive of the extremes, for a rear tyre.

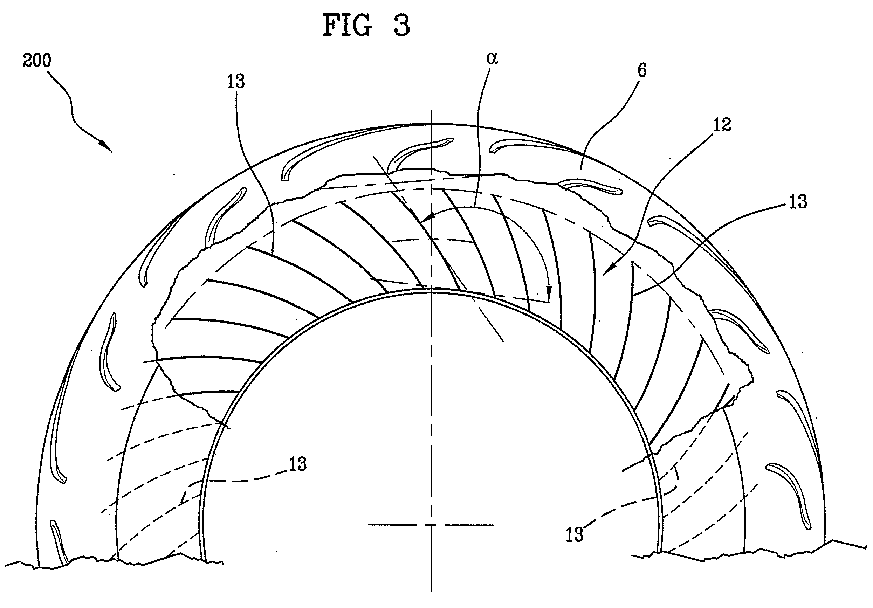

Selection of the angle can be carried out by a person skilled in the art depending on the performance to be obtained from the tyre. In a first embodiment thereof, the angle (α) is constant over the whole length of the cord. In a second embodiment shown in Fig. 3, the angle (α) is varying in a monotonic manner along the whole length of said cord 13. At all events, this angle (α) is always larger than 20° or included in the above mentioned preferred ranges, over the whole length of the cord.

In both the above described embodiments, cords 13 of the annular reinforcing structure 12 are made of steel wires. Preferably said cords 13 are made of low-carbon steel wires, i.e. steel wires containing less than 0.7% of carbon. Alternatively, cords 13 of the textile type can be used, which can be made of synthetic fibre such as nylon, rayon, PEN, PET.

Preferably, in this case high-modulus fibres are concerned, in particular aramidic fibres (Kevlar® fibres, for example). In a further embodiment, cords 13 of the hybrid type can be employed, which comprise at least one low-modulus thread, i.e. not beyond about 15000 N/mm2 (nylon or rayon, for example), interlaced with at least one high-modulus thread, i.e. not less than 25000 N/mm2 (Kevlar®, for example).

In addition, also falling within the scope of the present invention is adoption of metallic cords 13 of the type described in the patent application WO 2005/014309 in the name of the same Applicant.

Preferably, density of cords 13 defining the reinforcing structures 12 is greater than 40 cords/dm, most preferably greater than 70 cords/dm. To avoid the tyre sidewall being stiffened too much, density of cords 13 can be conveniently maintained to a smaller value than 160 cords/dm, more preferably smaller than 110 cords/dm.

Density of cords 13 defining the reinforcing structures 12 can be measured with reference to any circumferential direction on the tyre sidewall included within the reinforcing structure itself.

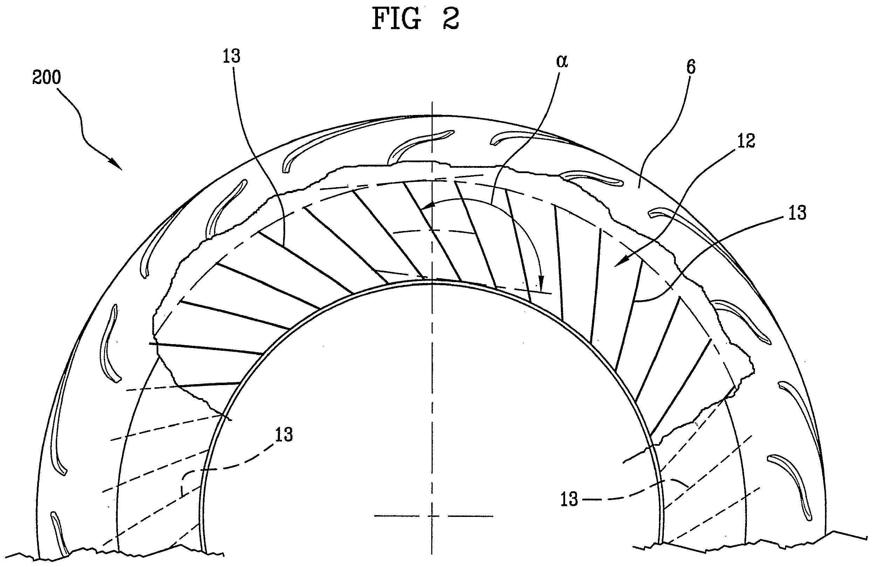

The cords 13 of the inventive tyre can further have a substantially rectilinear course, as shown in Fig. 2 or alternatively, as shown in Fig. 3, a substantially curvilinear course.

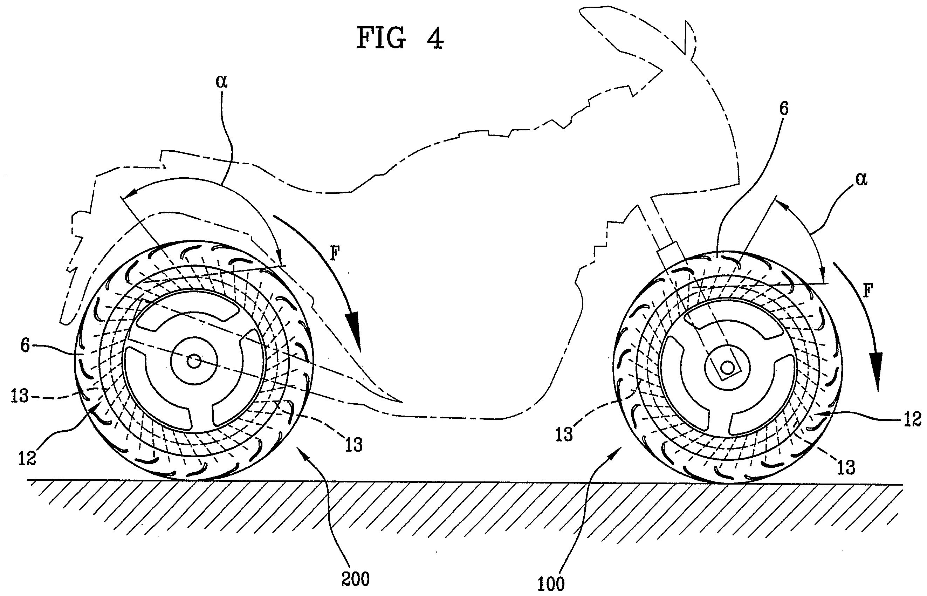

According to an aspect of the present invention, the reinforcing side structure 12 is formed of thread elements comprising a cord, such as a rubberised thread or a strip-like element. In the preferred embodiments shown in Figs. 1-3, each reinforcing side structure 12 is made up of rubberised strip-like elements preferably disposed in side by side relationship with each other along the circumferential extension of said tyre. In this way, at the end of a tyre rotation around its rotation axis, a closed annular structure is created. Preferably, the strip-like elements have a width included between 5 mm and 20 mm, a thickness included between 0.5 mm and 2 mm, and contain a number of cords in the range of 4 to 40, with a density preferably included between 60 and 160 cords per decimetre. The inventive tyre is particularly suitable for use on a two-wheeled vehicle both as front tyre 100 and as rear tyre 200, as shown in Fig. 4.

Tyres 100 and 200 have a rotation direction of their own that must be coincident with the rotation due to the forward running direction of the vehicle and is denoted by arrows F in Fig. 4. After fixing a predetermined circumferential direction and a rotation direction coincident, as above said, with the rotation due to the forward running direction, at each point of a cord, an angle (α) different from zero is identified, which is included between the tangent of the cord direction at that point and the tangent to a circumferential direction of the tyre passing through said point and oriented in said rotation direction of the tyre. In the rear tyre 200 the angle (α) being formed is larger than 90° while in the front tyre 100 the angle (α) is smaller than 90°. Preferably, the angle (α) is included in the range between 20° and 89°, inclusive of the extremes, for a front tyre, while it is included in the range of 91° to 160°, inclusive of the extremes, for a rear tyre.

Referring to the above description, it will be noticed that a pair like that depicted above acts particularly well for reducing the tyre deformations or distortions on application of a torque. Remember that this condition mainly occurs on the rear tyre 200 when the vehicle is subjected to acceleration, and mainly on the front tyre 100 when the vehicle is subjected to braking. In fact, it will be noticed that on acceleration, tyre 200 is subjected to a twisting moment in the same direction as that of the tyre rotation. As a consequence, the rear-tyre cords 13 are subjected to a tension. Inclination of the cords 13 disposed at an angle (α) larger than 90° in the rear tyre 200 increases the tensioning velocity of cords 13, reducing tyre deformation and increasing the tyre response speed. In fact, with such an orientation, the time employed by a cord for stretching is reduced.

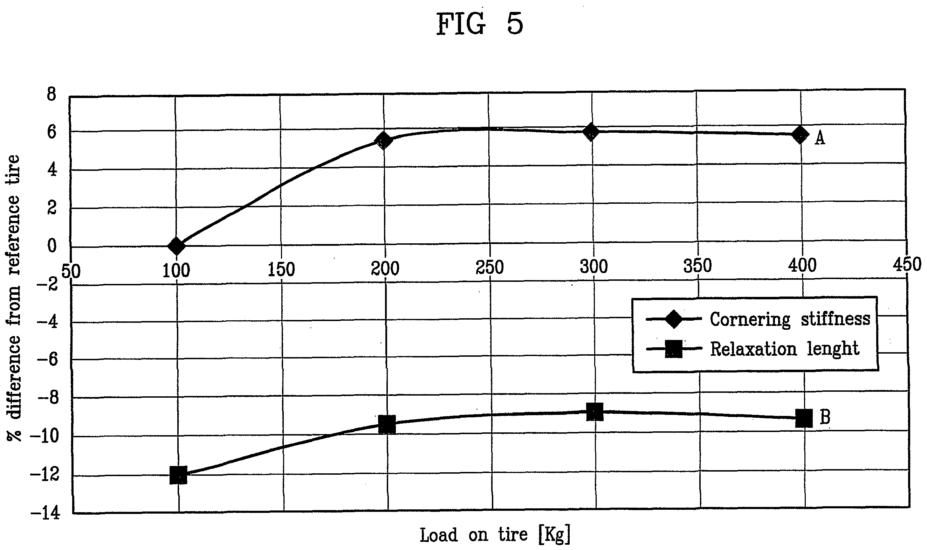

On braking, on the contrary, the front tyre 100 is subjected to a twisting moment in the direction opposite to the rotation direction of the tyre and in this case too the cords 13 of the front tyre 100 will be subjected to tensioning. The inclination of cords 13 at an angle (α) smaller than 90° in the front tyre 100 increases the tensioning velocity of cords 13, reducing deformation and increasing the tyre response speed. Fig. 5 is a diagram showing the variation in the percent difference of some stiffness parameters as a function of the load acting on the tyre (expressed in kg), between a rear tyre in accordance with the invention and a reference tyre of the traditional type showing the same outer geometry (curvature, sidewall height and type of tread pattern). It will be noted that the reference tyre is a rear tyre size 205/60 R420. In detail, curve A in Fig. 5 measures the percent variation in the cornering stiffness on varying of the load imposed on the tyre. A 100 kg load can be a good representation of the tyre in the initial bend step, while in the middle of a bend a load of 200 kg can be appropriate. On the contrary, a load of 300 kg is well close to the maximum stress to which the tyre is subjected during the end of a bend. It is to be pointed out that the cornering stiffness is an index of the greater lateral force expressed by the tyre on a bend, the tyre geometry being the same. It will be readily noticed that under any situation, with the inventive tyre, an increase in the cornering stiffness occurs relative to the reference tyre, which increase is at least of 2% at the first instants of a bend while values of 6% are reached during the maximum stress of the tyre. On the contrary, curve B, still in Fig. 5, measures the percent variation in the relaxation length of the tyre on varying of the load imposed thereon. It is to be pointed out that the instrument tests carried out to obtain the data of the graphs in Fig. 5, due to their own nature, are performed with tyres rotating around their rolling axis at a constant rotation speed and as such, the relaxation length is an index of the quick response of the tyre. In detail, the relaxation length is inversely proportional to the response quickness of the tyre. In this case too, it is possible to immediately observe that under any situation, with the inventive tyre, the relaxation length is at least 8% less than that expressed by the reference tyre. This denotes a much readier tyre under any bending condition.

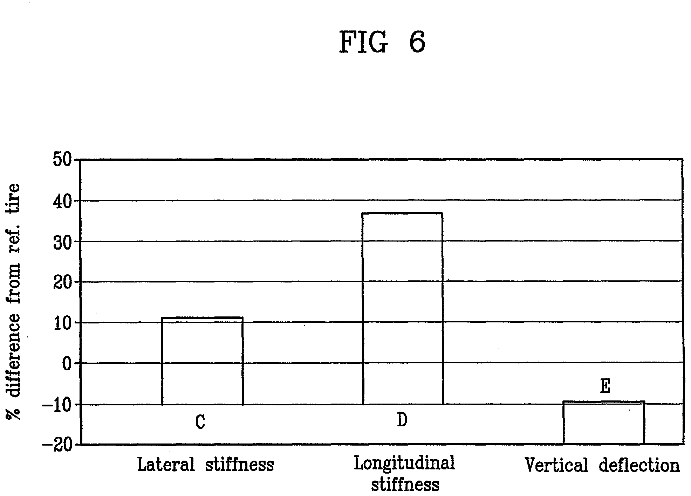

Fig. 6 is a diagram showing the variation in the percent difference of some stiffness parameters to a given vertical load imposed to the tyre, between a rear tyre of the invention and a traditional reference tyre. In this case too, the reference tyre is a rear tyre size 205/60 R420. In particular, histogram E denotes the vertical-deflection difference between the tyre of the invention and the reference tyre if subjected to a 300 kg vertical load. It is possible to see that the vertical deflection of the inventive tyre is 10.2% less.

Histogram D on the contrary shows the difference in the longitudinal stiffness between the inventive tyre and the reference tyre if subjected to a 300 kg vertical load and a longitudinal force. By longitudinal force it is intended a force applied in the tyre centre and directed in the forward-movement direction of the tyre. The longitudinal stiffness is measured as the ratio between the longitudinal force applied thereto and the displacement induced in the tyre, in the forward-movement direction. Therefore, the applied longitudinal force being the same, a smaller displacement corresponds to a greater longitudinal stiffness. Since this force, depending on its application point, produces a torque transferred from the tyre bead to the ground, the longitudinal stiffness measures the tyre capability of resisting a torque applied thereto. Therefore, as visible in Fig. 6, the tyre of the invention increases its longitudinal stiffness by almost 50% relative to the reference tyre. In other words, it resists in a much more efficient manner to application of a torque.

Finally, histogram C denotes the difference in the lateral stiffness between the inventive tyre and the reference tyre if they are subjected to a 300 kg vertical load and a lateral force. By lateral force it is intended a force applied into the tyre centre and directed orthogonal to the forward-movement direction of the tyre. The lateral stiffness is measured as the ratio between the lateral force applied thereto and the displacement induced in the tyre, in a direction orthogonal to the forward-movement direction. Therefore, the applied lateral force being the same, a smaller displacement corresponds to a greater lateral stiffness. This value is an index of the tyre deformability in a direction orthogonal to the forward-movement direction of the tyre. The tyre of the invention therefore, as represented in histogram C in Fig. 6, increases its lateral stiffness by almost 20% relative to the reference tyre and therefore deformations are much more reduced if it is subjected to laterally-directed stresses.

## Claims

1. A pair of tyres (100, 200) comprising a front tyre and a rear tyre to be mounted on a front wheel and a rear wheel respectively of a two-wheeled vehicle, in which each of said front and rear tyres comprises:
- a carcass structure having at least one carcass ply (2), said carcass ply being shaped in a substantially toroidal configuration and having its ends in engagement with respective circumferential annular reinforcing structures (9);
- a belt structure (5) applied to said carcass structure at a radially external position;
- a tread band (6) applied at a radially external position to said belt structure (5);
- a pair of sidewalls (7) laterally applied onto opposite sides relative to said carcass structure;
- a pair of reinforcing side structures (12), each applied at a sidewall (7);
and wherein:
- each reinforcing side structure (12) comprises a plurality of cords (13);
- at each point of a cord (13), an angle (α) is identified which is included between the tangent of the cord direction at that point and the tangent to a circumferential direction of the tyre passing through said point and oriented in the rolling direction of the tyre;
- said angle (α) in said rear tyre is larger than 90° and said angle (α) in said front tyre is smaller than 90°.

2. A pair of tyres (100, 200) as claimed in claim 1, wherein in each reinforcing side structure (12) said angle (α) is constant over the whole length of said cord (13).

3. A pair of tyres (100, 200) as claimed in claim 1, wherein in each reinforcing side structure (12) said angle (α) is variable in a monotonic manner over the whole length of said cord (13).

4. A pair of tyres (100, 200) as claimed in claim 1, wherein said angle (α) is included in the range of 20° to 89°, inclusive of the extremes, for said front tyre.

5. A pair of tyres (100, 200) as claimed in claim 1, wherein said angle (α) is included in the range of 91° to 160°, inclusive of the extremes, for said rear tyre.

6. A pair of tyres (100, 200) as claimed in claim 1, wherein said plurality of cords (13) is at least partly embedded in at least one layer of elastomeric material.

7. A pair of tyres (100, 200) as claimed in claim 1, wherein each reinforcing side structure (12) is a substantially annular structure.

8. A pair of tyres (100, 200) as claimed in claim 1, wherein each reinforcing side structure (12) has a height greater than or equal to 20% of the height of the sidewall (7).

9. A pair of tyres (100, 200) as claimed in claim 1, wherein said cords (13) are made of metal.

10. A pair of tyres (100, 200) as claimed in claim 9, wherein said cords (13) are made of steel.

11. A pair of tyres (100, 200) as claimed in claim 1, wherein said cords (13) comprise textile fibres.

12. A pair of tyres (100, 200) as claimed in claim 11, wherein said cords comprise high-modulus synthetic fibres.

13. A pair of tyres (100, 200) as claimed in claim 1, wherein each cord (13) has a substantially rectilinear course.

14. A pair of tyres (100, 200) as claimed in claim 1, wherein each cord (13) has a substantially curvilinear course.

15. A pair of tyres (100, 200) as claimed in claim 1, **characterised in that** said belt structure (5) comprises a layer including a plurality of cords (5a) spirally wound up at a substantially zero angle relative to the equatorial plane (X-X) of the tyre.

16. A pair of tyres (100, 200) as claimed in claim 15, **characterised in that** said spirally wound-up cords (5a) comprise high-elongation cords having a load-elongation diagram comprising a curvilinear portion connecting two substantially straight stretches of different slope.

17. A rear tyre (100, 200) for two-wheeled vehicles, comprising:
- a carcass structure having at least one carcass ply (2), said carcass ply being shaped in a substantially toroidal configuration and having its ends in engagement with respective circumferential annular reinforcing structures (9);
- a belt structure (5) applied to said carcass structure at a radially external position;
- a tread band (6) applied at a radially external position to said belt structure (5);
- a pair of sidewalls (7) laterally applied onto opposite sides relative to said carcass structure;
- a pair of reinforcing side structures (12), each applied at a sidewall;
wherein each reinforcing side structure (12) comprises a plurality of cords (13); wherein:
- each reinforcing side structure (12) extends from a radially innermost position to a radially external end of the respective annular reinforcing structure towards the belt structure (5); **characterised in that**
- at each point of a cord (13), an angle (α) different from zero is identified, which is included between the tangent of the cord (13) direction at that point and the tangent to a circumferential direction of the tyre passing through said point and oriented in the rolling direction of the tyre, wherein said angle (α) is included in the range of 91° to 160°, inclusive of the extremes.

18. A tyre (100, 200) as claimed in claim 17, wherein each reinforcing side structure (12) comprises at least one thread element.

19. A tyre (100, 200) as claimed in claim 18, wherein each thread element comprises a strip-like element including at least one said cord (13).

20. A tyre (100, 200) as claimed in claim 17, wherein each reinforcing side structure comprises a plurality of strip-like elements disposed in side by side relationship with each other along the circumferential extension of said tyre.

## Patentansprüche

1. Reifensatz (100, 200) umfassend einen Vorderradreifen und einen Hinterradreifen, die an einem Vorderrad bzw. einem Hinterrad eines Zweiradfahrzeugs montiert werden sollen, wobei jeder der Vorderrad- und Hinterradreifen umfasst:
- eine Karkassenstruktur mit zumindest einer Karkassenlage (2), wobei die Karkassenlage in einer im Wesentlichen ringförmigen Konfiguration ausgestaltet ist und ihre Enden in Eingriff mit jeweiligen umlaufenden ringförmigen Verstärkungsstrukturen (9) stehen;
- eine Gürtelstruktur (5), die an der Karkassenstruktur an einer radial äußeren Position angebracht ist;
- einen Laufflächenring (6), der in Bezug auf die Gürtelstruktur in einer radial äußeren Position (5) angelegt ist;
- ein Paar Seitenwände (7), die seitlich auf gegenüberliegenden Seiten in Bezug auf die Karkassenstruktur angebracht sind;
- ein Paar von seitlichen Verstärkungsstrukturen (12), die jeweils an einer Seitenwand (7) angebracht sind;
und wobei:
- jede seitliche Verstärkungsstruktur (12) eine Vielzahl von Korden (13) umfasst;
- wobei an jedem Punkt eines Kords (13) ein Winkel (α) identifiziert wird, der zwischen der Tangente der Kordrichtung an diesem Punkt und der Tangente zu einer Umfangsrichtung des Reifens, die durch diesen Punkt passiert und in der Rollrichtung des Reifens orientiert ist, eingeschlossen ist;
- wobei der Winkel (α) in dem Hinterradreifen größer als 90° ist, und der Winkel (α) in dem Vorderradreifen kleiner als 90° ist.

2. Reifensatz (100, 200) nach Anspruch 1, wobei in jeder seitlichen Verstärkungsstruktur (12) der Winkel (α) über die gesamte Länge des Kords (13) konstant ist.

3. Reifensatz (100, 200) nach Anspruch 1, wobei in jeder seitlichen Verstärkungsstruktur (12) der Winkel (α) auf monotone Weise über die gesamte Länge des Kords (13) konstant ist.

4. Reifensatz (100, 200) nach Anspruch 1, wobei der Winkel (α) für den Vorderradreifen in dem Bereich von 20° bis 89° (Extremwerte eingeschlossen) liegt.

5. Reifensatz (100, 200) nach Anspruch 1, wobei der Winkel (α) für den Hinterradreifen in dem Bereich von 91° bis 160° (Extremwerte eingeschlossen) liegt.

6. Reifensatz (100, 200) nach Anspruch 1, wobei die Vielzahl von Korden (13) zumindest teilweise in zumindest eine Lage aus Elastomermaterial eingebettet ist.

7. Reifensatz (100, 200) nach Anspruch 1, wobei jede seitliche Verstärkungsstruktur (12) eine im Wesentlichen ringförmige Struktur ist.

8. Reifensatz (100, 200) nach Anspruch 1, wobei jede seitliche Verstärkungsstruktur (12) eine Höhe aufweist, die größer oder gleich 20 % der Höhe der Seitenwand (7) ist.

9. Reifensatz (100, 200) nach Anspruch 1, wobei die Korde (13) aus Metall hergestellt sind.

10. Reifensatz (100, 200) nach Anspruch 9, wobei die Korde (13) aus Stahl hergestellt sind.

11. Reifensatz (100, 200) nach Anspruch 1, wobei die Korde (13) Textilfasern umfassen.

12. Reifensatz (100, 200) nach Anspruch 11, wobei die Korde synthetische Fasern mit hohem Modul umfassen.

13. Reifensatz (100, 200) nach Anspruch 1, wobei jeder Kord (13) einen im Wesentlichen geradlinigen Verlauf hat.

14. Reifensatz (100, 200) nach Anspruch 1, wobei jeder Kord (13) einen im Wesentlichen kurvenförmigen Verlauf hat.

15. Reifensatz (100, 200) nach Anspruch 1, **dadurch gekennzeichnet, dass** die Gürtelstruktur (5) eine Lage umfasst, die eine Vielzahl von Korden (5a) umfasst, die mit einem Winkel von im Wesentlichen Null relativ zu der Äquatorialebene (X-X) des Reifens gewickelt sind.

16. Reifensatz (100, 200) nach Anspruch 15, **dadurch gekennzeichnet, dass** die spiralig aufgewickelten Korde (5a) hoch streckfeste Korde mit einem Laststreckdiagramm umfassen, das einen kurvenförmigen Abschnitt umfasst, der zwei im Wesentlichen gerade Strecken mit unterschiedlicher Steigung verbindet.

17. Hinterradreifen (100, 200) für Zweiradfahrzeuge, umfassend:
- eine Karkassenstruktur mit zumindest einer Karkassenlage (2), wobei die Karkassenlage in einer im Wesentlichen ringförmigen Konfiguration ausgestaltet ist und ihre Enden in Eingriff mit jeweiligen umlaufenden ringförmigen Verstärkungsstrukturen (9) stehen;
- eine Gürtelstruktur (5), die an der Karkassenstruktur an einer radial äußeren Position angebracht ist;
- einen Laufflächenring (6), der in Bezug auf die Gürtelstruktur in einer radial äußeren Position (5) angelegt ist;
- ein Paar Seitenwände (7), die seitlich auf gegenüberliegenden Seiten in Bezug auf die Karkassenstruktur angebracht sind;
- ein Paar von seitlichen Verstärkungsstrukturen (12), die jeweils an einer Seitenwand angebracht sind;
wobei jede seitliche Verstärkungsstruktur (12) eine Vielzahl von Korden (13) umfasst;
wobei:
- jede seitliche Verstärkungsstruktur (12) sich von einer radial innersten Position zu einem radial äußeren Ende der jeweiligen ringförmigen Verstärkungsstruktur zu der Gürtelstruktur (5) hin erstreckt;
**dadurch gekennzeichnet, dass**
- an jedem Punkt eines Kords (13) ein Winkel (α) ungleich null identifiziert wird, der zwischen der Tangente der Richtung des Kordes (13) an diesem Punkt und der Tangente zu einer Umfangsrichtung des Reifens, die durch diesen Punkt passiert und in der Rollrichtung des Reifens orientiert ist, eingeschlossen ist, wobei der Winkel α in dem Bereich von 91° bis 160° (Extremwerte eingeschlossen) liegt.

18. Reifen (100, 200) nach Anspruch 17, wobei jede seitliche Verstärkungsstruktur (12) zumindest ein Wickelelement umfasst.

19. Reifen (100, 200) nach Anspruch 18, wobei jedes Wickelelement ein streifenförmiges Element mit zumindest einem Kord (13) umfasst.

20. Reifen (100, 200) nach Anspruch 17, wobei jede seitliche Verstärkungsstruktur eine Vielzahl von streifenförmigen Elementen umfasst, die in einer Beziehung Seite an Seite entlang der Umfangserstreckung des Reifens angeordnet sind.

## Revendications

1. Paire de pneus (100, 200) comprenant un pneu avant et un pneu arrière à monter sur une roue avant et une roue arrière respectivement d'un véhicule à deux roues, où chacun desdits pneus avant et arrière comprend :
- une structure de carcasse ayant au moins un pli de carcasse (2), ledit pli de carcasse étant façonné selon une configuration essentiellement toroïdale et ayant ses extrémités en engagement avec des structures de renforcement annulaires circonférentielles respectives (9) ;
- une structure de ceinture (5) appliquée à ladite structure de carcasse à une position radialement externe ;
- une bande de roulement (6) appliquée à une position radialement externe à ladite structure de ceinture (5) ;
- une paire de parois latérales (7) appliquées latéralement sur des côtés opposés par rapport à ladite structure de carcasse ;
- une paire de structures latérales de renforcement (12), chacune étant appliquée au niveau d'une paroi latérale (7) ; et où :
- chaque structure latérale de renforcement (12) comprend une pluralité de câbles (13) ;
- au niveau de chaque point d'un câble (13), un angle (α) est identifié qui est inclus entre la tangente de la direction de câble au niveau de ce point et la tangente à une direction circonférentielle du pneu passant par ledit point et orientée dans la direction de roulement du pneu ;
- ledit angle (α) dans ledit pneu arrière est supérieur à 90° et ledit angle (α) dans ledit pneu avant est inférieur à 90°.

2. Paire de pneus (100, 200) telle que revendiquée dans la revendication 1, dans laquelle, dans chaque structure latérale de renforcement (12), ledit angle (α) est constant sur toute la longueur dudit câble (13).

3. Paire de pneus (100, 200) telle que revendiquée dans la revendication 1, dans laquelle, dans chaque structure latérale de renforcement (12), ledit angle (α) est variable de manière monotone sur toute la longueur dudit câble (13).

4. Paire de pneus (100, 200) telle que revendiquée dans la revendication 1, dans laquelle ledit angle (α) est inclus dans la plage allant de 20° à 89°, y compris les extrêmes, pour ledit pneu avant.

5. Paire de pneus (100, 200) telle que revendiquée dans la revendication 1, dans laquelle ledit angle (α) est inclus dans la plage allant de 91° à 160°, y compris les extrêmes, pour ledit pneu arrière.

6. Paire de pneus (100, 200) telle que revendiquée dans la revendication 1, dans laquelle ladite pluralité de câbles (13) est au moins partiellement incorporée dans au moins une couche de matériau élastomère.

7. Paire de pneus (100, 200) telle que revendiquée dans la revendication 1, dans laquelle chaque structure latérale de renforcement (12) est une structure essentiellement annulaire.

8. Paire de pneus (100, 200) telle que revendiquée dans la revendication 1, dans laquelle chaque structure latérale de renforcement (12) a une hauteur supérieure ou égale à 20% de la hauteur de la paroi latérale (7).

9. Paire de pneus (100, 200) telle que revendiquée dans la revendication 1, dans laquelle lesdits câbles (13) sont en métal.

10. Paire de pneus (100, 200) telle que revendiquée dans la revendication 9, dans laquelle lesdits câbles (13) sont en acier.

11. Paire de pneus (100, 200) telle que revendiquée dans la revendication 1, dans laquelle lesdits câbles (13) comprennent des fibres textiles.

12. Paire de pneus (100, 200) telle que revendiquée dans la revendication 11, dans laquelle lesdits câbles comprennent des fibres synthétiques à haut module.

13. Paire de pneus (100, 200) telle que revendiquée dans la revendication 1, dans laquelle chaque câble (13) a une trajectoire essentiellement rectiligne.

14. Paire de pneus (100, 200) telle que revendiquée dans la revendication 1, dans laquelle chaque câble (13) a une trajectoire essentiellement curviligne.

15. Paire de pneus (100, 200) telle que revendiquée dans la revendication 1, **caractérisée en ce que** ladite structure de ceinture (5) comprend une couche comportant une pluralité de câbles (5a) enroulés en spirale à un angle essentiellement nul par rapport au plan équatorial (X-X) du pneu.

16. Paire de pneus (100, 200) telle que revendiquée dans la revendication 15, **caractérisée en ce que** lesdits câbles enroulés en spirale (5a) comprennent des câbles à allongement élevé ayant un diagramme force-allongement comprenant une partie curviligne reliant deux tronçons essentiellement droits de pente différente.

17. Pneu arrière (100, 200) pour des véhicules à deux roues, comprenant :
- une structure de carcasse ayant au moins un pli de carcasse (2), ledit pli de carcasse étant façonné selon une configuration essentiellement toroïdale et ayant ses extrémités en engagement avec des structures de renforcement annulaires circonférentielles respectives (9) ;
- une structure de ceinture (5) appliquée à ladite structure de carcasse à une position radialement externe ;
- une bande de roulement (6) appliquée à une position radialement externe à ladite structure de ceinture (5) ;
- une paire de parois latérales (7) appliquées latéralement sur des côtés opposés par rapport à ladite structure de carcasse ;
- une paire de structures latérales de renforcement (12), chacune étant appliquée au niveau d'une paroi latérale ;
dans lequel chaque structure latérale de renforcement (12) comprend une pluralité de câbles (13) ; où :
- chaque structure latérale de renforcement (12) s'étend depuis la position radialement la plus interne par rapport à une extrémité radialement externe de la structure de renforcement annulaire respective vers la structure de ceinture (5) ;
**caractérisé en ce que**
- au niveau de chaque point d'un câble (13), un angle (α) différent de zéro est identifié, qui est inclus entre la tangente de la direction de câble (13) au niveau de ce point et la tangente à une direction circonférentielle du pneu passant par ledit point et orientée dans la direction de roulement du pneu, où ledit angle (α) est inclus dans la plage allant de 91° à 160°, y compris les extrêmes.

18. Pneu (100, 200) tel que revendiqué dans la revendication 17, dans lequel chaque structure latérale de renforcement (12) comprend au moins un élément de filetage.

19. Pneu (100, 200) tel que revendiqué dans la revendication 18, dans lequel chaque élément de filetage comprend un élément en forme de bande comportant au moins ledit câble (13).

20. Pneu (100, 200) tel que revendiqué dans la revendication 17, dans lequel chaque structure latérale de renforcement comprend une pluralité d'éléments en forme de bande disposés côte à côte le long de l'extension circonférentielle dudit pneu.
